# EUROPÄISCHE PATENTSCHRIFT

(11) **EP 1 373 784 B1**
(45) Veröffentlichungstag und Bekanntmachung des Hinweises auf die Patenterteilung: **15.09.2004**
(21) Anmeldenummer: 02727524.7
(22) Anmeldetag: 05.04.2002
(51) Int. Cl.: F16L 59/06, G01M 3/28, B60S 5/02, F17C 5/00

(54) **ROHRBRUCHSICHERUNG FÜR EINE VAKUUMISOLIERTE BEFÜLLLEITUNG**
PIPE FRACTURE SAFETY FOR A VACUUM-INSULATED FILLING LINE
DISPOSITIF DE SECURITE ANTI-RUPTURE POUR CONDUITES DE REMPLISSAGE A ISOLATION PAR LE VIDE

(30) Priorität: 06.04.2001 DE 10117329
(43) Veröffentlichungstag der Anmeldung: 02.01.2004
(73) Patentinhaber: Linde Aktiengesellschaft, 65189 Wiesbaden (DE)
(72) Erfinder: KRAUS, Harald, 81371 München (DE); REESE, Wilfried-Henning, 85716 Unterschleissheim (DE)
(86) Internationale Anmeldenummer: PCT/EP2002/003773
(87) Internationale Veröffentlichungsnummer: WO 2002/081956

(56) Entgegenhaltungen:
- EP-A- 0 949 444
- DE-A- 2 504 519
- DE-A- 4 104 766
- US-A- 3 907 336
- US-A- 4 511 162
- US-A- 5 365 981
- US-B1- 6 171 025

## Beschreibung

Die Erfindung betrifft eine vakuumisolierte Befüllleitung, die eine Leitungsbruchsicherung aufweist, insbesondere für kryogene Medien, vorzugsweise für verflüssigten und/oder gasförmigen, unter hohem Druck stehenden Wasserstoff.

Ferner betrifft die Erfindung eine Tankstelle für kryogene Medien.

Im Folgenden werden bei den Bezeichnungen spezieller kryogener Medien entsprechend ihrem Aggregatzustand die Buchstaben "G" für "gasförmig" und "L" für "flüssig" bzw. "liquid" vorangestellt; also bspw. GH₂ bzw. LH₂ für gasförmigen bzw. flüssigen Wasserstoff.

Unter dem Begriff "kryogenes Medium" bzw. "kryogene Medien" sei nachfolgend auch verflüssigtes und gasförmiges Erdgas zu verstehen.

Insbesondere Wasserstoff gewinnt gegenwärtig durch den steigenden Energiebedarf und das gestiegene Umweltbewusstsein als Energieträger zunehmend an Bedeutung. So sind erste Versuche im Gange, Flugzeuge, Lastkraftwagen, Busse sowie Personenkraftwagen mittels mit Wasserstoff-betriebener Turbinen bzw. Motoren anzutreiben. Des Weiteren befinden sich bereits Fahrzeuge im Feldversuch, bei denen mittels einer Brennstoffzelle elektrische Energie erzeugt wird, die wiederum einen E-Motor antreibt. Der für den Betrieb der Brennstoffzelle erforderliche Wasserstoff wird bei diesen Fahrzeugen entweder in flüssiger oder gasförmiger und komprimierter Form gespeichert.

Die erforderlichen Tankstellen für kryogene Medien sollen auf absehbare Zeit als Selbstbedienungs-Tankstellen ausgelegt werden können; bisher erfolgt die Betankung von Kraftfahrzeugen an den wenigen Versuchstankstellen ausschließlich durch geschultes Fachpersonal.

Die Überführung des kryogenen Mediums, mit denen das Kraftfahrzeug betankt werden soll, aus dem Speicherbehälter der Tankstelle in den eigentlichen Fahrzeugspeicherbehälter erfolgt mittels vakuumisolierter Befüllleitungen, die - abhängig von dem angewandten Befüllungsverfahren - ein- oder mehradrig ausgebildet sind. Ihnen allen ist jedoch gemein, dass sie vakuumisoliert sind, um den Wärmeeinfall auf das kryogene Medium und damit in den Kraftfahrzeug-Speicherbehälter zu minimieren.

Kommt es nunmehr zu einem Leck in der Außenwandung der vakuumisolierten Befüllleitung, zu einem Abriss der Befüllleitung oder zu einem Durchbruch des kryogenen Mediums in den vakuumisolierten Bereich der Befüllleitung, so geht diese Isolation verloren und es kommt zu einem ggf. plötzlichen Verdampfen des kryogenen Mediums.

Aus der DE-A-25 04 519 ist ein Verfahren zur Lecküberwachung von Rohrleitungsträngen, bestehend aus zwei koaxialen Rohren, bekannt. Bei diesem Verfahren erfolgt eine Überwachung des Druckes in dem Zwischen- bzw. Kontrollraum zwischen den beiden Rohren, der mit einem erhöhten Druck beaufschlagt wird. Kommt es zu einem Druckabfall in dem Zwischen- bzw. Kontrollraum werden ein Alarmsignal generiert und entsprechende Maßnahmen eingeleitet.

Die US-A-4 511 162 beschreibt eine Leckdetektiervorrichtung, mittels derer ebenfalls der Druck in dem Zwischen- bzw. Kontrollraum zwischen zwei Rohren erfasst wird. Wird ein eingestellter Druckwert unter- oder-überschritten spricht die Leckdetektiervorrichtung an und es können entsprechende Maßnahmen eingeleitet werden.

Aufgabe der vorliegenden Erfindung ist es, eine gattungsgemäße vakuumisolierte Befüllleitung für kryogene Medien anzugeben, die eine konstruktiv einfache, wartungsfreie und zuverlässige Leitungsbruchsicherung aufweist.

Zur Lösung dieser Aufgabe wird eine vakuumisolierte Befüllleitung für kryogene Medien vorgeschlagen, die dadurch gekennzeichnet ist, dass die Leitungsbruchsicherung ausgebildet ist in Form eines an der Befüllleitung-Außenwandung angeordneten Führungsrohres, eines in dem Führungsrohr angeordneten und mit der Befüllleitung-Außenwandung fest verbundenen Faltenbalges, einer den Faltenbalg verschließenden (Kontakt)Platte und einer der Kontaktplatte zugeordneten Vorrichtung, die für die Erfassung der Bewegung der Kontaktplatte und/oder des Faltenbalges ausgebildet ist

Die Erfindung betrifft - wie bereits erwähnt - eine gattungsgemäße Tankstelle für kryogene Medien, die ein Befüllen von Kraftfahrzeugen mit kryogenen Medien durch ungeschultes Personal und durch den Kunden ermöglicht.

Zur Lösung dieser Aufgabe wird eine Tankstelle für kryogene Medien vorgeschlagen, die dadurch gekennzeichnet ist, dass sie wenigstens eine erfindungsgemäße vakuumisolierte Befüllleitung aufweist

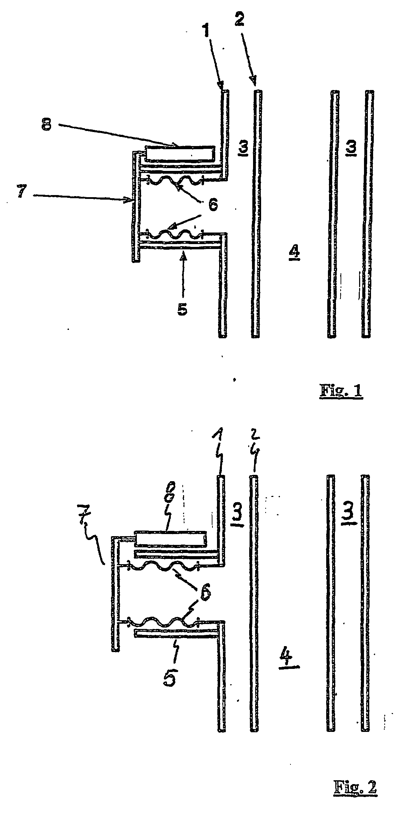

Die erfindungsgemäße vakuumisolierte Befüllleitung für kryogene Medien sowie weitere Ausgestaltungen derselben zeigen anhand des in den Figuren 1 und 2 dargestellten Ausführungsbeispieles näher erläutert.

Die Figuren 1 und 2 zeigen eine seitliche Schnittdarstellung durch eine Ausführungsform der erfindungsgemäßen vakuumisolierten Befüllleitung, wobei die Leitungsbruchsicherung in der Figur 1 in einem aktivierten Zustand dargestellt ist, während die identische Leitungsbruchsicherung in der Figur 2 in einem nicht aktivierten Zustand dargestellt ist.

Die im vorliegenden Falle einadrige vakuumisolierte Befüllleitung weist eine Außenwandung 1 sowie eine dazu konzentrisch angeordnete Medienleitung 2 auf. Ist die Befüllleitung zwei oder mehradrig ausgebildet, so sind die Leitungen entweder neben- und/oder ineinander angeordnet. Der Innenraum 4 der Medienleitung 2 dient der Überführung des kryogenen Mediums. Der Ringraum 3 ist aus den vorgenannten Gründen vakuumisoliert.

Erfindungsgemäß ist nunmehr an der Außenwandung 1 der Befüllleitung ein Führungsrohr 5 angeordnet. In diesem Führungsrohr 5 ist ein fest mit der Außenwandung 1 verbundener Faltenbalg 6 vorgesehen. Der Faltenbalg 6 ist hierzu vorzugsweise mit der Außenwandung 1 verschweißt Er besteht zudem vorzugsweise aus einem metallischen Material, jedoch sind auch andere Materialen, wie beispielsweise Kunststoffmaterialien denkbar.

Der Faltenbalg 6 wird von einer sog. Kontaktplatte 7 verschlossen, wobei Faltenbalg 6 und Kontaktplatte 7 wiederum vorzugsweise miteinander verschweißt sind.

Der Kontaktplatte 7 ist erfindungsgemäß eine Vorrichtung zugeordnet, die für die Erfassung der Bewegung der Kontaktplatte 7 ausgebildet ist. Als eine derartige Vorrichtung eignet sich insbesondere ein pneumatischer Kontaktgeber 8, wie er in den Figuren 1 und 2 dargestellt ist.

Daneben können jedoch auch andere Vorrichtungen, die für die Erfassung der Bewegung der (Kontakt)Platte 7 und/oder des Faltenbalges 6 geeignet sind, zur Anwendung kommen. Dies sind bspw. elektrische Kontaktgeber, elektrische Näherungskontaktschalter oder magnetisch aktivierte Sensoren.

Aufgrund des Vakuums in dem Ringraum 3 der erfindungsgemäßen Befüllleitung wird der Faltenbalg 6 zusammengezogen. Die Kontaktplatte kommt dadurch zur Auflage auf das Führungsrohr 5 und aktiviert den pneumatischen Kontaktgeber 8.

Kommt es nun aufgrund einer Leckage in der Außenwandung 1, eines Abrisses der erfindungsgemäßen Befüllleitung oder eines Durchbruches des kryogenen Mediums aus dem Raum 4 in den Ringraum 3 zu einem Aufbruch des Vakuums, entspannt sich der Faltenbalg 6 - wie dies in der Figur 2 dargestellt ist - entsprechend der ausgelegten Federlänge bzw. -stärke, da die ihn anziehende Kraft nicht mehr gegeben ist. Durch den Aufbruch des Vakuums und die damit verbundene Entspannung des Faltenbalges 6 wird die Kontaktplatte 7 von dem pneumatischen Kontaktgeber 8 weggeführt, so dass dieser nicht mehr länger aktiviert ist.

Der pneumatische Kontaktgeber 8 ist mit der Steuerung der Tankstelle derart zu verknüpfen, dass im Falle der Deaktivierung des pneumatischen Kontaktgebers 8 über eine entsprechende (Not-)Schaltung die Zufuhr von kryogenem Medium in die erfindungsgemäße Befüllleitung unterbrochen wird und gegebenenfalls die Tankstelle in einen sicheren Betriebszustand gefahren wird.

Denkbar ist zudem, dass - sofern in dem zu betankenden Kraftfahrzeug ein entsprechendes Absperrventil vorgesehen ist - dieses Absperrventil ebenfalls im Falle der Deaktivierung des pneumatischen Kontaktgebers 8 schließt, um den unerwünschten Wärmeeinfall in den Kraftfahrzeugspeicherbehälter zu unterbinden. Dies setzt jedoch voraus, dass der pneumatische Kontaktgeber 8 und/oder die Steuerung der Tankstelle mit dem Absperrventil des Kraftfahrzeuges bzw. mit dessen Steuerung verbunden sind.

Die erfindungsgemäße vakuumisolierte Befüllleitung für kryogene Medien ermöglicht das sichere Befüllen von Kraftfahrzeugen mit kryogenen Medien auch durch ungeschulte Personen. Dadurch wird die Akzeptanz für Tankstellen, die der Betankung von Fahrzeugen mit kryogenen Medien dienen, erhöht, deren Bedienbarkeit erleichtert und die Möglichkeit geschaffen, derartige Tankstellen als Selbstbedienungs-Tankstellen auszulegen.

Der erfindungsgemäße Gedanken lässt sich neben den erwähnten vakuumisolierten Befüllleitungen für kryogene Medien grundsätzlich in allen vakuumisolierten Leitungen - unabhängig von deren Verwendungszweck - realisieren.

## Patentansprüche

1. Vakuumisolierte Befüllleitung, die eine Leitungsbruchsicherung aufweist, insbesondere für kryogene Medien, vorzugsweise für verflüssigten und/oder gasförmigen, unter hohem Druck stehenden Wasserstoff, **dadurch gekennzeichnet, dass** die Leitungsbruchsicherung ausgebildet ist in Form eines an der Befüllleitung-Außenwandung (1) angeordneten Führungsrohres (5), eines in dem Führungsrohr (5) angeordneten und mit der Befüllleitung-Außenwandung (1) fest verbundenen Faltenbalges (6), einer den Faltenbalg (6) verschließenden Kontaktplatte (7) und einer der Kontaktplatte (7) zugeordneten Vorrichtung, die für die Erfassung der Bewegung der Kontaktplatte (7) und/oder des Faltenbalges (6) ausgebildet ist.

2. Vakuumisolierte Befüllleitung für kryogene Medien nach Anspruch 1, **dadurch gekennzeichnet, dass** die der Kontaktplatte (7) zugeordnete Vorrichtung, die für die Erfassung der Bewegung der Kontaktplatte (7) und/oder des Faltenbalges (6) ausgebildet ist, ein pneumatischer Kontaktgeber (8), ein elektrischer Kontaktgeber, ein elektrischer Näherungskontaktschalter oder ein magnetisch aktivierter Sensor ist.

3. Vakuumisolierte Befüllleitung für kryogene Medien nach Anspruch 1 oder 2, **dadurch gekennzeichnet, dass** der Faltenbalg (6) aus einem metallischen Material und/oder einem Kunststoffmaterial besteht.

4. Tankstelle für kryogene Medien, **dadurch gekennzeichnet, dass** die Tankstelle wenigstens eine vakuumisolierte Befüllleitung nach einem der vorhergehenden Ansprüche aufweist.

5. Tankstelle für kryogene Medien nach Anspruch 4, **dadurch gekennzeichnet, dass** die Tankstelle Mittel zum Erkennen bzw. Erfassen des Aktivierens und/oder Deaktivierens der Leitungsbruchsicherung aufweist.

## Claims

1. Vacuum-insulated filling line, which has a line fracture safety feature, in particular for cryogenic media, preferably for liquefied and/or gaseous hydrogen under a high pressure, **characterized in that** the line fracture safety feature is designed in the form of a guide tube (5), which is arranged at the filling line outer wall (1), a bellows (6), which is arranged in the guide tube (5) and is fixedly connected to the filling line outer wall (1), a contact plate (7), which closes the bellows (6), and a device which is assigned to the contact plate (7) and is designed to record the movement of the contact plate (7) and/or of the bellows (6).

2. Vacuum-insulated filling line for cryogenic media according to Claim 1, **characterized in that** the device which is assigned to the contact plate (7) and is designed to the record the movement of the contact plate (7) and/or of the bellows (6) is a pneumatic contact-making element (8), an electrical contact-making element, an electrical proximity contact switch or a magnetically activated sensor.

3. Vacuum-insulated filling line for cryogenic media according to Claim 1 or 2, **characterized in that** the bellows (6) consists of a metallic material and/or a plastics material.

4. Refuelling station for cryogenic media, **characterized in that** the refuelling station includes at least one vacuum-insulated filling line according to one of the preceding claims.

5. Refuelling station for cryogenic media according to Claim 4, **characterized in that** the refuelling station includes means for detecting or recording the activation and/or deactivation of the line fracture safety feature.

## Revendications

1. Conduite de remplissage à isolation par le vide, laquelle présente un dispositif de sécurité anti-rupture pour conduite, notamment pour des fluides cryogènes, de préférence pour de l'hydrogène liquéfié et/ou sous forme gazeuse sous haute pression, **caractérisée en ce que** le dispositif de sécurité anti-rupture pour conduite est réalisé sous la forme d'un tube de guidage (5) disposé sur la paroi extérieure de la conduite de remplissage (1), d'un soufflet (6) disposé dans le tube de guidage (5) et relié à demeure avec la paroi extérieure de la conduite de remplissage (1), d'une plaque de contact (7) qui ferme le soufflet (6) et d'un dispositif associé à la plaque de contact (7) qui est configuré pour détecter le mouvement de la plaque de contact (7) et/ou du soufflet (6).

2. Conduite de remplissage à isolation par le vide pour des fluides cryogènes selon la revendication 1, **caractérisée en ce que** le dispositif associé à la plaque de contact (7), lequel est configuré pour détecter le mouvement de la plaque de contact (7) et/ou du soufflet (6), est un contacteur pneumatique (8), un contacteur électrique, un détecteur de proximité électrique ou un capteur à activation magnétique.

3. Conduite de remplissage à isolation par le vide pour des fluides cryogènes selon la revendication 1 ou 2, **caractérisée en ce que** le soufflet (6) se compose d'un matériau métallique et/ou d'une matière plastique.

4. Point d'approvisionnement pour fluides cryogènes, **caractérisé en ce que** le point d'approvisionnement présente au moins une conduite de remplissage à isolation par le vide selon l'une des revendications précédentes.

5. Point d'approvisionnement pour fluides cryogènes selon la revendication 4, **caractérisé en ce que** le point de remplissage présente des moyens pour reconnaître ou détecter l'activation et/ou la désactivation du dispositif de sécurité anti-rupture pour conduite.
